(19) Europäisches Patentamt
European Patent Office
Office européen des brevets

(11) EP 3 594 255 A1

(12) EUROPÄISCHE PATENTANMELDUNG

(43) Veröffentlichungstag:
**15.01.2020 Patentblatt 2020/03**

(21) Anmeldenummer: **18182378.2**

(22) Anmeldetag: **09.07.2018**

(51) Int Cl.:
***C08G 18/48*** (2006.01) ***C08G 18/76*** (2006.01)
***C08G 18/18*** (2006.01) ***C08G 18/20*** (2006.01)
***C08G 18/22*** (2006.01) ***C08G 18/30*** (2006.01)
***C08G 101/00*** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

# (54) VERFAHREN ZUR HERSTELLUNG VON VISKOELASTISCHEN POLYURETHANSCHAUMSTOFFEN

(57) Der Gegenstand der vorliegenden Erfindung betrifft ein Verfahren zur Herstellung von Polyurethanschaumstoffen, bevorzugt von viskoelastischen, insbesondere viskoelastischen und offenzelligen Polyurethanschaumstoffen auf Polyetherpolyol- und Toluylendiisocyanatbasis, wobei die resultierenden Polyurethanschaumstoffe ähnliche Eigenschaften wie die bereits bekannten viskoelastischen Polyurethanschaumstoffe aufweisen, diese jedoch in ihrer Herstellung einfacher und nachhaltiger sind.

EP 3 594 255 A1

## Beschreibung

Der Gegenstand der vorliegenden Erfindung betrifft ein Verfahren zur Herstellung von Polyurethanschaumstoffen, bevorzugt von viskoelastischen, insbesondere viskoelastischen und offenzelligen, Polyurethanschaumstoffen auf Polyetherpolyol- und Toluylendiisocyanatbasis, wobei die resultierenden Polyurethanschaumstoffe ähnliche Eigenschaften wie die bereits bekannten viskoelastischen Polyurethanschaumstoffe aufweisen, diese jedoch in ihrer Herstellung einfacher und nachhaltiger sind.

Viskoelastische Schaumstoffe zeichnen sich durch eine langsame, graduelle Rückverformung nach einer erfolgten Kompression aus. Solche Materialien sind im Stand der Technik wohl bekannt und werden wegen ihrer Energie-absorbierenden Eigenschaften sehr geschätzt. Viskoelastische Schaumstoffmaterialien finden sich in einer Vielzahl von Anwendungsbereichen zur Polsterung (wie zum Beispiel in Kissen, Sitzbezügen, Matratzen usw.), als Schall- und/oder Vibrations-dämpfende Materialien oder auch als Aufprallschutz.

Unter den viskoelastischen Schaumstoffmaterialien besitzen solche aus Polyurethanen sicherlich die größte Bedeutung. Dies liegt zum einen darin begründet, dass sich durch die Wahl der verwendeten Polyol- beziehungsweise Isocyanatkomponenten und gegebenenfalls weiterer Hilfsstoffe die physikalischen Eigenschaften des zu erhaltenden Polyurethanschaumstoffes sehr genau einstellen lassen, zum anderen aber auch daran, dass sich durch die "in situ"-Herstellung (gegebenenfalls vor Ort) Schaumstoffmaterialien nahezu beliebiger und sehr komplexer Form und Struktur herstellen lassen.

Bei der Herstellung von Polyurethanen werden gewöhnlich zwei oder mehrere Flüssigkeitsströme miteinander vereinigt. Die Mischung dieser Flüssigkeitsströme initiiert die Polymerisation und gegebenenfalls das Aufschäumen des polymerisierenden Materials. Polymerisation und Formgebung erfolgen oft in einem Schritt, typischerweise durch Formgebung oder Sprühen der noch im flüssigen Zustand befindlichen Reaktionsmischung. Daneben werden Polyurethane auch oft in Form von Blöcken hergestellt, welche anschließend in die gewünschte Form zurechtgeschnitten werden.

Bei den oben genannten Flüssigkeitsströmen handelt es sich in der Mehrzahl der Fälle auf der einen Seite um eine bi- bzw. polyfunktionelle organische Isocyanatkomponente und auf der anderen Seite um Propylenoxid- oder Ethylenoxid-basierte Polyhydroxyverbindungen, welche Isocyanaten gegenüber eine entsprechende Reaktivität aufweisen und gegebenenfalls weitere Hilfsstoffe enthalten können. Dieses Gemisch umfasst typischerweise zum größten Teil eine oder mehrere Polyolkomponenten.

Um nun einen Polyurethanschaumstoff bestimmter Zusammensetzung zu erhalten, werden die oben beschriebenen Flüssigkeitsströme vor ihrer Vermischung entsprechend dosiert. Ein Aufschäumen wird dabei normalerweise so erreicht, dass der Polyol-Komponente Wasser zugesetzt wird, welche mit dem Polyisocyanat unter Bildung eines Amins und unter Freisetzung von $CO_2$ reagiert, welches wiederum als Treibgas fungiert. Alternativ oder zusätzlich zu der Verwendung von Wasser werden oft auch flüchtige inerte organische Verbindungen oder inerte Gase verwendet.

Die Mehrzahl der konventionellen Polyurethanschaumstoffe stellen Blockcopolymere dar, welche räumlich getrennte Bereiche verschiedener Phasen mit hohen und niedrigen Glasübergangstemperaturen ($T_G$) aufweisen. Die Glasübergangstemperatur trennt dabei den unterhalb von ihr liegenden spröden energieelastischen Bereich (= Glasbereich) von dem oberhalb von ihr liegenden weichen entropieelastischen Bereich (= gummielastischer Bereich). Diese hohen und niedrigen Glasübergangstemperaturen verschiedener Phasen innerhalb des Polymers grenzen normalerweise den Temperaturbereich ein, innerhalb dessen man das besagte Material verwenden kann. Die DMA- ("dynamic mechanical analysis") Spektren solcher Materialien zeichnen sich üblicherweise durch einen relativ flachen Bereich ("modulus plateau") zwischen den verschiedenen Glasübergängen aus.

Die Phase geringer Glasübergangstemperatur in diesen Materialien leitet sich üblicherweise (obwohl nicht immer) von einem "Block" geringer Glasübergangstemperatur ab, welcher vorgeformt wird und anschließend erst der Polymerisation unterworfen wird. Die Phase hoher Glasübergangstemperatur bildet sich demgegenüber normalerweise erst während der Polymerisation, bedingt durch die dann erfolgende Ausbildung der Urethaneinheiten. Der Block geringer Glasübergangstemperatur (oft auch als "Weichblock" bezeichnet) leitet sich üblicherweise von einer Flüssigkeit oder von einem oligomeren Harz geringer Schmelztemperatur ab, welche eine Vielzahl von gegenüber Isocyanateinheiten reaktiven Gruppen enthalten. Polyether- und Polyesterpolyole sind Beispiele solcher oligomeren Harze.

In konventionellen Polyurethanen ordnen sich die harten (hohe Glasübergangstemperatur) und weichen (niedrige Glasübergangstemperatur) Phasen während der Polymerisation zueinander an und trennen sich anschließend spontan voneinander, um voneinander morphologisch verschiedene Phasen innerhalb des "Bulkpolymers" auszubilden. Bei solchen Materialien spricht man entsprechend auch von "phasenseparierten" Materialien.

Viskoelastische Polyurethane stellen in diesem Zusammenhang gewissermaßen einen Spezialfall dar, bei welchen nämlich die oben beschriebene Phasentrennung nur unvollständig oder überhaupt nicht auftritt.

Von einer solchen "Struktur-Viskoelastizität" bei Polyurethanschäumen mit (überwiegend) offenen Zellen zu unterscheiden ist eine solche Viskoelastizität, die auf einen pneumatischen Effekt zurückzuführen ist. In letzterem Falle befinden sich nämlich nahezu geschlossene Zellen innerhalb des Schaumstoffmaterials, also Zellen mit nur einer geringen Öffnung. Aufgrund der geringen Luftdurchlässigkeit der Zellmembranen strömt die Luft nach einer Kompression

nur langsam wieder ein, was eine verlangsamte Rückverformung zur Folge hat.

Es gibt zwei Gruppen von viskoelastischen Polyurethanschaumstoffen, die sich in ihrer Zellstruktur und ihrer Viskoelastizität unterscheiden: Struktur-, oder chemisch-viskoelastische Schaumstoffe und pneumatisch (physikalisch) viskoelastische Schaumstoffe. Die chemisch viskoelastischen Schaumstoffe können sowohl auf TDI (Toluylendiisocyanat)- als auch auf MDI (Methylendiphenylisocyanat)- Basis hergestellt werden und zeichnen sich dadurch aus, dass ihre Glasübergangstemperatur in der Nähe der Raumtemperatur liegt. Viskoelastische Polyurethanschaumstoffe, die mit TDI T 65 und MDI hergestellt werden, zeigen normalerweise eine gemäß den Erfordernissen akzeptable Luftdurchlässigkeit (nach dem Aufdrücken; MDIbasierte Schaumstoffe müssen in der Regel "gewalkt", d.h. aufgedrückt werden). Im Gegensatz zu diesen viskoelastischen Polyurethanschaumstoffen, neigen die mit TDI T 80 hergestellten Polyurethanschaumstoffe zu geschlossenen Zellstrukturen. Die pneumatisch viskoelastischen Schaumstoffe sind stark geschlossenzellig, was einen "Slow-Recovery-Effekt" zur Folge hat. Diese viskoelastischen Schaumstoffe werden durch Umsetzung einer Polyetherpolyol-Komponente mit einem MDI (Methylendiphenylisocyanat) hergestellt. Die Polyetherpolyol-Komponente besteht aus ca. 80 pphp (parts per 100 parts polyol) eines Ethylenoxid-reichen Polyetherpolyols und aus ca. 20 pphp eines Co-Polyetherpolyols, welches überwiegend Propylenoxid-Bausteine enthält. Die vorliegende Erfindung bezieht sich auf die chemisch viskoelastischen Schaumstoffe auf TDI-Basis.

Um viskoelastische Schaumstoffe auf Polyetherpolyol- und Toluylendiisocyanatbasis mit einer gewünschten Offenzelligkeit zu erhalten wurden bisher zwei unterschiedliche Chargen von Toluylendiisocyanatgemischen eingesetzt. Die erste Charge ist eine durch eine einfache Herstellung, nämlich einer Nitrierung und dann Reduktion zum Amin und Phosgenierung, erhältliche Mischung aus 80 Gew.-% 2,4-Toluylendiisocyanat und 20 Gew.-% 2,6-Toluylendiisocyanat. Die zweite Mischung besteht aus 67 Gew.-% 2,4-Toluylendiisocyanat und 33 Gew.-% 2,6-Toluylendiisocyanat und muss um den höheren Gehalt an 2,6-Toluylendiisocyanat zu erhalten kosten- und arbeitsintensiv aufgearbeitet werden. Dabei wird 2,4-Toluylendiisocyanat aus der Mischung auskristallisiert, um den Anteil an 2,6-Toluylendiisocyanat zu erhöhen. Der höhere Gehalt an 2,6-Toluylendiisocyanat war bisher wiederum nötig, um die gewünschte Offenzelligkeit beziehungsweise keinen Schrumpf der Schaumstoffe zu erhalten.

Um zu den gewünschten viskoelastischen Schaumstoffen, mit einem hohen Anteil an 2,6-Toluylendiisocyanat, zu gelangen wurden im Stand der Technik bisher zusätzlich kommerziell erhältliche Verbindungen auf Silikonbasis eingesetzt. Der Einsatz dieser Verbindungen bei reduziertem 2,6-Tolyulendiisocyanatgehalt führte jedoch nicht zu gewünschten viskoelastischen Schaumstoffen, sondern die erhaltenen Schaumstoffe wiesen einen Schrumpf auf.

Aufgabe der vorliegenden Erfindung war es deshalb ein System für viskoelastische und offenzellige Polyurethanschaumstoffe zu finden, in dem der Einsatz der mittels Auskristallisation aufgearbeiteten Charge des Toluylendiisocyanatgemisches verringert oder komplett vermieden werden kann.

Die Erfinder der vorliegenden Erfindung haben dabei überraschend gefunden, dass dies durch den Einsatz spezifischer Carbonsäureester der vorliegenden Erfindung möglich ist. Die so erhaltenen Polyurethanschaumstoffe wiesen eine gleichmäßige Porenstruktur und gute mechanische Eigenschaften auf.

Die Aufgabe der vorliegenden Erfindung wird gelöst durch ein Verfahren zur Herstellung von Polyurethanschaumstoffen, bevorzugt viskoelastischen Polyurethanschaumstoffen, insbesondere viskoelastischen und offenzelligen Polyurethanschaumstoffen, durch Umsetzung von Komponente A) enthaltend eines oder mehrere Polyetherpolyole A1, mit einer Hydroxylzahl gemäß DIN 53240-1:2013-06 von mehr als 120 mg KOH/g,

B) gegebenenfalls
B1) Katalysatoren, und/oder
B2) Hilfs- und Zusatzstoffen
C) Wasser und/oder physikalischen Treibmitteln,
mit
D) Di- und/oder Polyisocyanaten, welche im Wesentlichen aus 2,4-Toluylendiisocyanat und 2,6-Toluylendiisocyanat bestehen;

wobei die Herstellung bei einer Kennzahl von 70 bis 120 erfolgt,
dadurch gekennzeichnet, dass die Herstellung in Gegenwart mindestens einer Verbindung E erfolgt, die folgende Formel (I) aufweist:

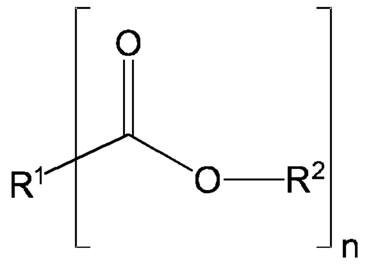

(I)

wobei

$R^1$ ein aromatischer Kohlenwasserstoffrest mit mindestens 5 Kohlenstoffatomen ist oder ein linearer, verzweigter, substituierter oder unsubstituierter aliphatischer Kohlenwasserstoffrest mit mindestens 2, im Falle von verzweigt mindestens 3, Kohlenstoffatomen ist;
$R^2$ ein linearer, verzweigter, substituierter oder unsubstituierter aliphatischer Kohlenwasserstoffrest ist; und
n gleich 1 bis 3 ist.

Ist in der vorliegenden Erfindung angegeben, dass eine bestimmte Verbindung oder Rest substituiert sein kann, so werden dabei dem Fachmann bekannte Substituenten verwendet. Insbesondere bevorzugt ist dabei, dass in den Verbindungen ein oder mehrere Wasserstoffatome durch -F, -Cl, -Br, -I, -OH, =O, $-OR^3$, $-OC(=O)R^3$, $-C(=O)-R^3$, $-NH_2$, $-NHR^3$, $-NR^3_2$ ersetzt sind, wobei $R^3$ einen linearen Alkylrest mit 1 bis 10 Kohlenstoffatomen oder einen verzweigten Alkylrest mit 3 bis 10 Kohlenstoffatomen darstellt. Besonders bevorzugt sind die Substituenten -F, -Cl, $-OR^3$, $-OC(=O)R^3$, und $-C(=O)-R^3$, wobei $R^3$ einen linearen Alkylrest mit 1 bis 10 Kohlenstoffatomen oder einen verzweigten Alkylrest mit 3 bis 10 Kohlenstoffatomen darstellt.

Der Ausdruck "im Wesentlichen aus... bestehen" im Sinne der vorliegenden Erfindung bedeutet, dass die jeweilige Verbindung oder die jeweiligen Verbindungen bezogen auf die gesamte Komponente mehr als 95 Gew.-%, bevorzugt mehr als 98 Gew.-%, stärker bevorzugt mehr als 99 Gew.-%, insbesondere bevorzugt 100 Gew.-% der jeweiligen Komponente ausmachen. Beispielsweise machen 2,4-Toluylendiisocyanat und 2,6-Toluylendiisocyanat mehr als 95 Gew.-%, bevorzugt mehr als 98 Gew.-%, stärker bevorzugt mehr als 99 Gew.-%, insbesondere bevorzugt 100 Gew.-% der Komponente D) aus.

Insbesondere betrifft die vorliegende Erfindung:

1. Verfahren zur Herstellung von Polyurethanschaumstoffen, bevorzugt viskoelastischen, insbesondere viskoelastischen und offenzelligen Polyurethanschaumstoffen, durch Umsetzung von

Komponente A) enthaltend eines oder mehrere Polyetherpolyole A1, mit einer Hydroxylzahl gemäß DIN 53240-1:2013-06 von mehr als 120 mg KOH/g, insbesondere 130 mg KOH/g bis 220 mg KOH/g, bevorzugt 145 bis 180 mg KOH/g, und gegebenenfalls
bevorzugt einer Hydroxyl-Funktionalität von mindestens 2, stärker bevorzugt 2,5 bis 3,5, am stärksten bevorzugt 2 bis 3, und/oder
bevorzugt einem Gehalt an Ethylenoxid von 0,01 bis 59,0 Gew.-%, stärker bevorzugt 1 bis 30 Gew.-%, am stärksten bevorzugt 5 bis 15 Gew.-% und/oder
bevorzugt einem Gehalt an Propylenoxid von 40 bis 99,99 Gew.-%, stärker bevorzugt 70 bis 99,9 Gew.-%, am stärksten bevorzugt 85 bis 95 Gew.-%, wobei die Polyetherpolyole A1 vorzugsweise frei von Carbonateinheiten sind,
B) gegebenenfalls

B1) Katalysatoren, und/oder
B2) Hilfs- und Zusatzstoffen

C) Wasser und/oder physikalischen Treibmitteln,
mit
D) Di- und/oder Polyisocyanaten, welche im Wesentlichen aus 2,4-Toluylendiisocyanat und 2,6-Toluylendiisocyanat bestehen;

wobei die Herstellung bei einer Kennzahl von 70 bis 120, bevorzugt 85 bis 105, erfolgt, dadurch gekennzeichnet, dass die Herstellung in Gegenwart mindestens einer Verbindung E erfolgt, die folgende Formel (I) aufweist:

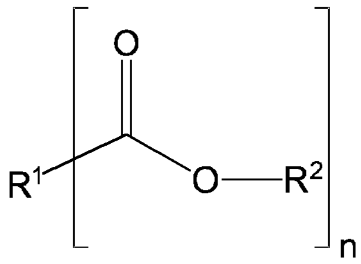

(I)

wobei

$R^1$ ein aromatischer Kohlenwasserstoffrest mit mindestens 5 Kohlenstoffatomen ist oder ein linearer, verzweigter, substituierter oder unsubstituierter aliphatischer Kohlenwasserstoffrest mit mindestens 2, im Falle von verzweigt mindestens 3, Kohlenstoffatomen ist;
$R^2$ ein linearer, verzweigter, substituierter oder unsubstituierter aliphatischer Kohlenwasserstoffrest ist; und
n gleich 1 bis 3 ist.

2. Verfahren gemäß Aspekt 1, dadurch gekennzeichnet, dass in Formel (I)
$R^1$ ein aromatischer Kohlenwasserstoffrest mit mindestens 6 Kohlenstoffatomen ist oder ein linearer, verzweigter, substituierter oder unsubstituierter aliphatischer Kohlenwasserstoffrest mit mindestens 3, bevorzugt 3 bis 10, Kohlenstoffatomen ist;
$R^2$ ein linearer, verzweigter, substituierter oder unsubstituierter aliphatischer Kohlenwasserstoffrest mit mindestens 3, bevorzugt 3 bis 16, Kohlenstoffatomen ist; und n gleich 1 bis 3 ist;
bevorzugt ist $R^1$ ein aromatischer Kohlenwasserstoffrest mit 6 Kohlenstoffatomen oder ein linearer, verzweigter, substituierter oder unsubstituierter aliphatischer gesättigter Kohlenwasserstoffrest mit mindestens 3, bevorzugt 3 bis 10, Kohlenstoffatomen; stärker bevorzugt ist die Verbindung ein Ester einer gegebenenfalls substituierten $C_{3-12}$ Monocarbonsäure die mit einem linearen oder verzweigten $C_{3-16}$ Alkylalkohol verestert wurde, insbesondere Hexylhexanoat;
oder ein Ester einer gegebenenfalls substituierten $C_{4-12}$, stärker bevorzugt $C_{6-10}$, Dicarbonsäure die mit einem linearen oder verzweigten $C_{3-16}$ Alkylalkohol verestert wurde, insbesondere ausgewählt aus Bis(2-ethylhexyl)adipat und Diisodecylsebacat;
oder ein Ester einer gegebenenfalls substituierten $C_{5-16}$, stärker bevorzugt $C_{6-10}$; Tricarbonsäure, die mit einem linearen oder verzweigten $C_{3-16}$ Alkylalkohol verestert wurde, insbesondere ausgewählt aus Tris(2-ethylhexyl) O-acetylcitrat, und Tributyl O-acetylcitrat;
oder ein Ester eines mono-, di-, oder tri- substituierten Benzols mit einer Carbonsäuregruppe, das mit einem linearen oder verzweigten $C_{3-16}$ Alkylalkohol verestert wurde, insbesondere Ester von $C_{6-16}$ Alkylalkoholen und Trimesinsäure oder Trimellitsäure, besonders bevorzugt Tris(2-ethylhexyl)trimellitat.

3. Verfahren gemäß Aspekt 1 oder 2, dadurch gekennzeichnet, dass die Komponente A die folgende Zusammensetzung aufweist:

A1 80 bis 100 Gew.-Teile, bevorzugt 85 bis 99 Gew.-Teile, stärker bevorzugt 90 bis 95 Gew.-Teile, eines oder mehrerer Polyetherpolyole mit einer Hydroxylzahl gemäß DIN 53240-1:2013-06 von mehr als 120 mg KOH/g, insbesondere 130 mg KOH/g bis 220 mg KOH/g, bevorzugt 145 bis 180 mg KOH/g, und gegebenenfalls bevorzugt einer Hydroxyl-Funktionalität von mindestens 2, stärker bevorzugt 2,5 bis 3,5, am stärksten bevorzugt 2 bis 3, und/oder
bevorzugt einem Gehalt an Ethylenoxid von 0,01 bis 59,0 Gew.-%, stärker bevorzugt 1 bis 30 Gew.-%, am stärksten bevorzugt 5 bis 15 Gew.-% und/oder
bevorzugt einem Gehalt an Propylenoxid von 40 bis 99,99 Gew.-%, stärker bevorzugt 70 bis 99,9 Gew.-%, am stärksten bevorzugt 85 bis 95 Gew.-%, wobei die
Polyetherpolyole A1 vorzugsweise frei von Carbonateinheiten sind,
A2 0 bis 20 Gew.-Teile, bevorzugt 1 bis 15 Gew.-Teile, stärker bevorzugt 5 bis 10 Gew.-Teile eines oder mehrerer Polyetherpolyole mit einer Hydroxylzahl gemäß DIN 53240-1:2013-06 von 20 mg KOH/g bis 120 mg KOH/g, bevorzugt 25 bis 112 mg KOH/g, stärker bevorzugt 35 bis 80 mg KOH/g, bezogen auf die Summe der Gew.-Teile der Komponenten A1 und A2, wobei die Summe der Gewichtsteile A1 + A2 in der Zusammensetzung 100 ergibt.

4. Verfahren gemäß einem der vorstehenden Aspekte, dadurch gekennzeichnet, dass die mindestens eine Verbindung E in einer Menge von 1,0 bis 15,0, bevorzugt 2,5 bis 13,0, stärker bevorzugt 4,0 bis 12,0 Gew.-Teile eingesetzt wird, wobei sich alle Gewichtsteilangaben der Verbindung E auf 100 Gewichtsteile der Komponenten A1 beziehen.

5. Verfahren gemäß einem der vorstehenden Aspekte, dadurch gekennzeichnet, dass als Komponente B

B1 Katalysatoren wie

a) aliphatische tertiäre Amine, cycloaliphatische tertiäre Amine, aliphatische Aminoether, cycloaliphatische Aminoether, aliphatische Amidine, cycloaliphatische Amidine, Harnstoff und Derivate des Harnstoffs und/oder
b) Zinn(II)-Salze von Carbonsäuren, und

B2 gegebenenfalls Hilfs- und Zusatzstoffe eingesetzt werden.

6. Verfahren gemäß einem der vorstehenden Aspekte, dadurch gekennzeichnet, dass Komponente D mindestens 95 Gew.-%, bevorzugt mindestens 98 Gew.-%, 2,4-Toluylendiisocyanat und 2,6-Toluylendiisocyanat umfasst.

7. Verfahren gemäß einem der vorstehenden Aspekte, dadurch gekennzeichnet, dass in der Komponente D höchstens 26,5 Gew.-% an 2,6-Toluylendiisocyanat enthalten sind, basierend auf dem Gesamtgewicht der Komponente D, bevorzugt wobei 22,0 bis 26,5 Gew.-% an 2,6-Toluylendiisocyanat enthalten sind, basierend auf dem Gesamtgewicht der Komponente D, stärker bevorzugt wobei 20,5 bis 26,5 Gew.-% an 2,6-Toluylendiisocyanat enthalten sind, basierend auf dem Gesamtgewicht der Komponente D, am stärksten bevorzugt wobei 26,5 Gew.-% an 2,6-Toluylendiisocyanat enthalten sind, basierend auf dem Gesamtgewicht der Komponente D.

8. Verfahren gemäß Aspekt 7, dadurch gekennzeichnet, dass 2,4-Toluylendiisocyanat und 2,6-Toluylendiisocyanat als eine Mischung mindestens zweier Chargen eingesetzt werden wobei die erste Charge 2,4-Toluylendiisocyanat zu 2,6-Toluylendiisocyanat im Verhältnis von 80 Gew.-% zu 20 Gew.-% enthält und die zweite Charge 2,4-Toluylendiisocyanat zu 2,6-Toluylendiisocyanat im Verhältnis von 67 Gew.-% zu 33 Gew.-% enthält, wobei der Anteil an der zweiten Charge höchstens 50 Gew.-%, bevorzugt höchstens 25 Gew.-%, bezogen auf das Gesamtgewicht der ersten und der zweiten Charge beträgt, stärker bevorzugt wobei lediglich die beiden Chargen als Komponente D eingesetzt werden.

9. Polyurethanschaumstoffe, erhältlich durch ein Verfahren gemäß einem der Aspekte 1 bis 8.

10. Polyurethanschaumstoffe gemäß Aspekt 9, dadurch gekennzeichnet, dass es sich um viskoelastische Polyurethanschaumstoffe handelt, insbesondere um offenzellige, viskoelastische Polyurethanschaumstoffe.

11. Polyurethanschaumstoffe gemäß Aspekt 9 oder 10, dadurch gekennzeichnet, dass die Polyurethanschaumstoffe ein Raumgewicht gemäß DIN EN ISO 845:2009-10 von 40,0 bis 70,0 $kg/m^3$, bevorzugt 50,0 bis 65,0 $kg/m^3$, aufweisen.

12. Verwendung der Polyurethanschaumstoffe gemäß einem der Aspekte 9 bis 11 zur Herstellung von Matratzen, Kissen, Sitzbezügen, Schuheinlagen, Ohrenstöpsel, Schutzkleidung, Schutzausrüstung oder Schallisolierungen.

13. Zweikomponentensystem zur Herstellung von Polyurethanschaumstoffen, bevorzugt viskoelastischen Polyurethanschaumstoffen, insbesondere viskoelastischen und offenzelligen Polyurethanschaumstoffen, enthaltend
eine erste Komponente K1 umfassend oder bestehend aus:

Komponente A) enthaltend eines oder mehrere Polyetherpolyole A1, mit einer Hydroxylzahl gemäß DIN 53240-1:2013-06 von mehr als 120 mg KOH/g, insbesondere 130 mg KOH/g bis 220 mg KOH/g, bevorzugt 145 bis 180 mg KOH/g, und gegebenenfalls
bevorzugt einer Hydroxyl-Funktionalität von mindestens 2, stärker bevorzugt 2,5 bis 3,5, am stärksten bevorzugt 2 bis 3, und/oder
bevorzugt einem Gehalt an Ethylenoxid von 0,01 bis 59,0 Gew.-%, stärker bevorzugt 1 bis 30 Gew.-%, am stärksten bevorzugt 5 bis 15 Gew.-% und/oder bevorzugt einem Gehalt an Propylenoxid von 40 bis 99,99 Gew.-%, stärker bevorzugt 70 bis 99,9 Gew.-%, am stärksten bevorzugt 85 bis 95 Gew.-%, wobei die Polyetherpolyole A1 vorzugsweise frei von Carbonateinheiten sind,
B) gegebenenfalls

B1) Katalysatoren, und/oder
B2) Hilfs- und Zusatzstoffen
C) Wasser und/oder physikalischen Treibmitteln, und
E) eine Verbindung, die folgende Formel (I) aufweist:

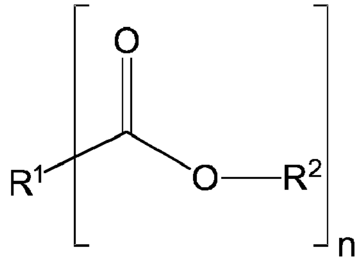

(I)

wobei

$R^1$ ein aromatischer Kohlenwasserstoffrest mit mindestens 5 Kohlenstoffatomen ist oder ein linearer, verzweigter, substituierter oder unsubstituierter aliphatischer Kohlenwasserstoffrest mit mindestens 2 Kohlenstoffatomen ist;
$R^2$ ein linearer, verzweigter, substituierter oder unsubstituierter aliphatischer Kohlenwasserstoffrest ist; und
n gleich 1 bis 3 ist
und eine zweite Komponente K2 umfassend oder bestehend aus:

D) Di- und/oder Polyisocyanaten, welche im Wesentlichen aus 2,4-Toluylendiisocyanat und 2,6-Toluylendiisocyanat bestehen, wobei die Komponente K1 und die Komponente K2 in einem Verhältnis einer Isocyanat-Kennzahl von 70 bis 120, bevorzugt 85 bis 105, zueinander vorliegen.

Wird im Folgenden offenbart, dass es sich um die Hydroxylzahl gemäß DIN 53240 handelt, so wird darunter insbesondere die Hydroxylzahl nach DIN 53240-1:2013-06 verstanden.

Komponente A

Die Komponente A1 umfasst Polyetherpolyole, mit einer Hydroxylzahl gemäß DIN 53240-1:2013-06 von mehr als 120 mg KOH/g, insbesondere 130 mg KOH/g bis 220 mg KOH/g, bevorzugt 145 bis 180 mg KOH/g, und gegebenenfalls mit
bevorzugt einer Hydroxyl-Funktionalität von mindestens 2, stärker bevorzugt 2,5 bis 3,5, am stärksten bevorzugt 2 bis 3, und/oder
bevorzugt einem Gehalt an Ethylenoxid von 0,01 bis 59,0 Gew.-%, stärker bevorzugt 1 bis 30 Gew.-%, am stärksten bevorzugt 5 bis 15 Gew.-% und/oder
bevorzugt einem Gehalt an Propylenoxid von 40 bis 99,99 Gew.-%, stärker bevorzugt 70 bis 99,9 Gew.-%, am stärksten bevorzugt 85 bis 95 Gew.-% Wobei in bevorzugten Aspekten die Komponente A1 frei von Carbonateinheiten ist.

Die Herstellung der Verbindungen gemäß A1 kann durch katalytische Addition von einem oder mehreren Alkylenoxiden an H-funktionelle Starterverbindungen erfolgen.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyioxypropyltriethoxysilan, 3 -Glycidyloxypropyltripropoxysilan, 3 -Glycidyloxypropylmethyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid eingesetzt. Besonders bevorzugt wird ein Überschuss an Propylenoxid und/oder 1,2-Butylenoxid eingesetzt.

Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

Die H-funktionellen Starterverbindungen weisen Funktionalitäten von ≥ 2 bis ≤ 6 auf und sind vorzugsweise hydroxyfunktionell (OH-funktionell). Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Diese können auch in Mischung verwendet werden. Vorzugsweise wird als Starterverbindung 1,2-Propylenglykol und/oder Glycerin und/oder Trimethylolpropan und/oder Sorbitol eingesetzt, insbesondere 1,2Propylenglykol und Glycerin.

Komponente A2

Die optionale Komponente A2 umfasst Polyetherpolyole mit einer Hydroxylzahl gemäß DIN 53240 von ≥ 20 mg KOH/g bis ≤ 120 mg KOH/g, vorzugsweise von ≥ 25 bis ≤ 112 mg KOH/g und besonders bevorzugt ≥ 30 mg KOH/g bis ≤ 80 mg KOH/g und ist vorzugsweise frei von Carbonateinheiten.

Die Herstellung der Verbindungen gemäß A2 kann durch katalytische Addition von einem oder mehreren Alkylenoxiden an H-funktionelle Starterverbindungen erfolgen.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyioxypropyltriethoxysilan, 3 -Glycidyloxypropyltripropoxysilan, 3 -Glycidyloxypropylmethyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid eingesetzt. Besonders bevorzugt wird ein Überschuss an Propylenoxid und/oder 1,2-Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

Die H-funktionellen Starterverbindungen weisen Funktionalitäten von ≥ 2 bis ≤ 6 auf und sind vorzugsweise hydroxyfunktionell (OH-funktionell). Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Diese können auch in Mischung verwendet werden. Vorzugsweise wird als Starterverbindung 1,2-Propylenglykol und/oder Glycerin und/oder Trimethylolpropan und/oder Sorbitol eingesetzt, insbesondere Glycerin.

Als H-funktionelle Starterverbindungen kommen bevorzugt solche in Frage, die eine Funktionalität von ≥ 3 bis ≤ 6, besonders bevorzugt von 3 aufweisen, so dass Polyethertriole entstehen. Bevorzugte Starterverbindungen mit einer Funktionalität von 3 sind Glycerin und/oder Trimethylolpropan, besonders bevorzugt ist Glycerin.

Die Polyetherpolyole gemäß A2 weisen einen Gehalt von ≥ 0,1 bis ≤ 99,0 Gew.-%, vorzugsweise von ≥ 10 bis ≤ 90 Gew.-%, besonders bevorzugt ≥ 15 bis ≤ 85 Gew.-% an Ethylenoxid und/oder einen Gehalt von 0,1 bis 99,9 Gew.-%, bevorzugt 10 bis 90 Gew.-%, stärker bevorzugt 15 bis 85 Gew-.% an Propylenoxid auf. Besonders bevorzugt sind die Ethylenoxideinheiten endständig.

In einer besonders bevorzugten Ausführungsform ist die Komponente A2 ein Glyceringestarteter trifunktioneller Polyether mit einem Ethylenoxidanteil von 68 bis 73 Gew.-% und einer OH-Zahl von 35 bis 40 mg KOH/g.

Komponente B

Als Katalysatoren gemäß der Komponente B1 werden vorzugsweise

a) aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff) und/oder

b) Zinn(II)-Salze von Carbonsäuren

eingesetzt.

Optional werden die Zinn(II)-Salze von Carbonsäuren eingesetzt, wobei die jeweils zugrundeliegende Carbonsäure von 2 bis 24 Kohlenstoffatome aufweist. Beispielsweise werden als Zinn(II)-Salze von Carbonsäuren eine oder mehrere Verbindungen ausgewählt aus der Gruppe bestehend aus Zinn(II)-Salz der 2-Ethylhexansäure (d.h. Zinn(II)-(2-ethylhexanoat) oder Zinnoktoat), Zinn(II)-Salz der 2-Butyloctansäure, Zinn(II)-Salz der 2-Hexyldecansäure, Zinn(II)-Salz der Neodecansäure, Zinn(II)-Salz der Isononansäure, das Zinn(II)-Salz der Ölsäure, Zinn(II)-Salz der Ricinolsäure und Zinn(II)laurat eingesetzt.

In einer bevorzugten Ausführungsform der Erfindung wird mindestens ein Zinn(II)-Salz der Formel (VII)

$$Sn(CxH_{2x+1}COO)_2 \qquad (VII)$$

eingesetzt, wobei x eine ganze Zahl von 8 bis 24, bevorzugt 10 bis 20, besonders bevorzugt von 12 bis 18 bedeutet. Besonders bevorzugt ist in Formel (IX) die Alkylkette $C_xH_{2x+1}$ des Carboxylats eine verzweigte Kohlenstoffkette, d.h. $C_xH_{2x+1}$ ist eine iso-Alkylgruppe.

In einer anderen bevorzugten Ausführungsform der Erfindung wird als Komponente B1

B1.1 ≥ 0,05 bis ≤ 1,5 Gew.-Teilen, bezogen auf die Summe der Gew.-Teile der Komponenten A1 und A2, Harnstoff und/oder Derivate des Harnstoffs und

B1.2 ≥ 0,03 bis ≤ 1,5 Gew.-Teilen, bezogen auf die Summe der Gew.-Teile der Komponenten A1 und A2, anderer Katalysatoren als die der Komponente B1.2, wobei der Gehalt an aminischen Katalysatoren in der Komponente B1.2 bevorzugt maximal 50 Gew.-% bezogen auf Komponente B1 betragen darf, eingesetzt.

Komponente B1.1 umfasst Harnstoff und Derivate des Harnstoffs. Als Derivate des Harnstoffs seien beispielsweise genannt: Aminoalkylharnstoffe, wie z.B. (3-Dimethylaminopropylamin)-harnstoff und 1,3-Bis[3-(dimethylamino)propyl]harnstoff. Es können auch Mischungen von Harnstoff und Harnstoffderivaten eingesetzt werden. Bevorzugt wird ausschließlich Harnstoff in Komponente B1.1 eingesetzt. Die Komponente B1.1 wird in Mengen von ≥ 0,05 bis ≤ 1,5 Gew.-Teilen, bevorzugt von ≥ 0,1 bis ≤ 0,5 Gew.-Teilen, besonders bevorzugt von ≥ 0,25 bis ≤ 0,4 Gew.-Teilen, bezogen auf die Summe der Gew.-Teile der Komponenten A1 bis A2, eingesetzt.

Die Komponente B1.2 wird in Mengen von ≥ 0,03 bis ≤ 1,5 Gew.-Teilen, bevorzugt ≥ 0,03 bis ≤ 0,8 Gew.-Teilen, besonders bevorzugt von ≥ 0,1 bis ≤ 0,65 Gew.-Teilen, ganz besonders bevorzugt von ≥ 0,2 bis ≤ 0,3 Gew.-Teilen, bezogen auf die Summe der Gew.-Teile der Komponenten A1 bis A2, eingesetzt.

Vorzugsweise beträgt der Gehalt an aminischen Katalysatoren in der Komponente B1.2 maximal 50 Gew-% bezogen auf Komponente B1.1, besonders bevorzugt maximal 25 Gew.-% bezogen auf Komponente B1.1. Ganz besonders bevorzugt ist Komponente B1.2 frei von aminischen Katalysatoren. Als Katalysatoren der Komponente B1.2 können z.B. die oben beschriebenen Zinn(II)-Salze von Carbonsäuren eingesetzt werden.

Als in geringen Mengen (s.o.) gegebenenfalls mitzuverwendende aminische Katalysatoren seien genannt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine und cycloaliphatische Amidine.

Geeignete kommerziell erhältliche Katalysatoren (tertiäre Amine) sind unter den Handelsnamen DABCO NE 500, DABCO NE 600, DABCO NE 300 bekannt.

Zu den in B1.2 genannten "aminischen Katalysatoren" gehören nicht Harnstoff oder seine Derivate.

Ein nicht-alkalisches Medium kann vorzugsweise dadurch erreicht werden, dass als Katalysatoren gemäß Komponente B1 Harnstoff und/oder Derivate des Harnstoffs eingesetzt werden, und keine aminischen Katalysatoren eingesetzt werden.

Als Komponente B2 können Hilfs- und Zusatzstoffe eingesetzt werden, wie

a) oberflächenaktive Zusatzstoffe, wie Emulgatoren und Schaumstabilisatoren insbesondere solche mit niedriger Emission wie beispielsweise Produkte der Tegostab®-Serie

b) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel (verschieden von Komponente K3; wie beispielsweise Ammoniumpolyphosphat), weitere Stabilisatoren gegen Alterungs- und Witterungseinflüsse, Antioxidantien, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffen sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben. In bevorzugten Aspekten ist die Komponente B2 in weniger als 5 Gew.-Teilen, stärker bevorzugt 0,1 bis 2,5 Gew.-Teilen, bezogen auf 100 Gew.-Teile von A1 + A2 enthalten.

Komponente C

Als Komponente C werden Wasser und/oder physikalische Treibmittel eingesetzt. Als physikalische Treibmittel werden beispielsweise Kohlendioxid und/oder leicht flüchtige organische Substanzen als Treibmittel eingesetzt. Vorzugsweise wird Wasser als Komponente C eingesetzt. In bevorzugten Aspekten ist die Komponente C in weniger als 10 Gew.-Teilen, stärker bevorzugt 0,5 bis 5,5 Gew.-Teilen, bezogen auf 100 Gew.-Teile von A1 + A2 enthalten.

Komponente D

Die Di- und/oder Polyisocyanate der vorliegenden Erfindung bestehen im Wesentlichen aus 2,4-Toluylendiisocyanat und 2,6-Toluylendiisocyanat.

Gegebenenfalls können weitere Polyisocyanate vorhanden sein. Beispielsweise handelt es sich um solche Polyisocyanate, wie sie in der EP-A 0 007 502, Seiten 7 - 8, beschrieben werden.

Bevorzugt werden in der Regel die technisch leicht zugänglichen Polyisocyanate, zum Beispiel das 2,4- und 2,6-Toluylendiisocyanat, sowie beliebige Gemische dieser mit Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird eine Mischung von 2,4- und 2,6-Toluylendiisocyanat mit 4,4'- und/oder 2,4'- und/oder 2,2'-Diphenylmethandiisocyanat und Polyphenylpolymethylenpolyisocyanat ("Mehrkern-MDI") eingesetzt. Besonders bevorzugt wird lediglich 2,4- und/oder 2,6-Toluylendiisocyanat eingesetzt.

In einer bevorzugten Ausführungsform des erfindungsgemäßen Verfahrens beträgt die Kennzahl ≥ 70 bis ≤ 120. Vorzugsweise liegt die Kennzahl in einem Bereich von ≥ 75 bis ≤ 115, besonders bevorzugt ≥ 85 bis ≤ 105. Die Kennzahl (Index) gibt das prozentuale Verhältnis der tatsächlich eingesetzten Isocyanat-Menge zur stöchiometrischen, d.h. für die Umsetzung der OH-Äquivalente berechneten Menge an Isocyanat-Gruppen (NCO)-Menge an.

$$\text{Kennzahl} = [\text{Isocyanat-Menge eingesetzt}) : (\text{Isocyanat-Menge berechnet}) \bullet 100 \qquad \text{(II)}$$

In einem bevorzugten Aspekt werden die Komponenten wie folgt eingesetzt:

Komponente A1 in 70 bis 100 Gew.-%, insbesondere 90 Gew.-% oder 100 Gew.-%; und/oder
Komponente A2 in 0 bis 30 Gew.-%, insbesondere 10 Gew.-% oder 0 Gew.-%, wobei die Summe der Komponenten A1 und A2 100 Gew.-% beträgt; und/oder
Komponente B1 in 0,02 bis 0,8 Gew-%, bevorzugt 0,06 bis 0,25 Gew-%, insbesondere bevorzugt 0,22 Gew.-%, bezogen auf 100 Gew.-% von A1; und/oder
Komponente B2 in 0,1 bis 6 Gew.-%, bevorzugt 0,2 bis 1,2 Gew.-%, insbesondere bevorzugt 1,3 Gew.-%, bezogen auf 100 Gew.-% von A1; und/oder
Komponente C in 0,8 bis 3,0 Gew.-%, bevorzugt 1,9 Gew.-%, bezogen auf 100 Gew.-% von A1; und/oder
Komponente E in 2,0 Gew.-% bis 15 Gew-%, bevorzugt 4, 0 bis 12,0 Gew.-%, bezogen auf 100 Gew.-% von A1.

Zur Herstellung der Polyurethanschaumstoffe werden die Reaktionskomponenten bevorzugterweise nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.

Die Polyurethanschaumstoffe liegen vorzugsweise als viskoelastische Polyurethanschaumstoffe vor und können als Form- oder auch als Blockschaumstoffe, vorzugsweise als Blockschaumstoffe hergestellt werden. Gegenstand der Erfindung sind daher ein Verfahren zur Herstellung der Polyurethanschaumstoffe, die nach diesen Verfahren hergestellten Polyurethanschaumstoffe, die nach diesen Verfahren hergestellten viskoelastischen Polyurethanblockschaumstoffe bzw. Polyurethanformschaumstoffe, die Verwendung der Polyurethanschaumstoffe zur Herstellung von Formteilen sowie die Formteile selbst.

Die nach der Erfindung erhältlichen Polyurethanschaumstoffe vorzugsweise viskoelastische Polyurethanschaumstoffe, finden beispielsweise folgende Anwendung: Matratzen, Kissen, Sitzbezüge, Schuheinlagen, Ohrenstöpsel, Schutzkleidung, Schutzausrüstung oder Schallisolierungen.

## Beispiele

Komponente A:

A1-1 DESMOPHEN 24WB03: Propylenoxid-basiertes Polyolgemisch; hergestellt mittels KOH-Katalyse; Starter: Glycerin sowie 1,2-Propylenglycol; OH-Zahl: 165 mg KOH/g.

Komponente B:

B1-1 Bis[2-dimethylamino)ethyl]ether (70 Gew.-%) in Dipropylenglykol (30 Gew.-%) (Niax® Catalyst A-1, Momentive Performance Materials, Leverkusen, Deutschland).

B1-2 1,4-Diazabicyclo[2.2.2]octan (33 Gew.-%) in Dipropylenglykol (67 Gew.-%) (Dabco® 33 LV, Evonik, Essen, Deutschland).

B2-1 Polyethersiloxan-basierender Schaumstoffstabilisator Tegostab® BF 2370 (Evonik, Essen, Deutschland).

B2-2 Polyethersiloxan-basierender Schaumstoffstabilisator Tegostab® BF 2470 (Evonik, Essen, Deutschland).

B2-3 Ortegol® VCO; Zellöffner für viskoelastische Schaumstoffe (Evonik, Essen, Deutschland).

B2-4 NIAX Silicone L-620; Polyethersiloxan-basierender Schaumstoffstabilisator (Momentive Performance Materials, Leverkusen, Deutschland).

B2-5 NIAX Silicone L-626 Zellöffner für viskoelastische Schaumstoffe (Momentive Performance Materials, Leverkusen, Deutschland).

B2-6 Harnstoff (pur); Pellets; Lieferant: Oqema AG, Mönchengladbach. Anmerkung: Der Harnstoff muss stets in Form einer wässrigen Lösung verarbeitet bzw. dosiert werden.

Komponente C: Wasser

Komponente D:

D-1 Gemisch aus 2,4- und 2,6-TDI im Gewichtsverhältnis 80 : 20 und mit einem NCO-Gehalt von 48 bis 48,2 Gew.-%, kommerziell erhältlich als Desmodur T 80 (Covestro AG).

D-2 Gemisch aus 2,4- und 2,6-TDI im Gewichtsverhältnis 67 : 33 und mit einem NCO-Gehalt von 48 bis 48,2 Gew.-

%, kommerziell erhältlich als Desmodur T 65 (Covestro AG).

Komponente E:

E-1 Bis(2-ethylhexyl)adipat, kommerziell erhältlich als Oxsoft DOA
E-2 Hexylhexanoat, bezogen über Sigma-Aldrich

Herstellung der Polyurethanschaumstoffe

Unter den für die Herstellung von Polyurethanschaumstoffen üblichen Verarbeitungsbedingungen werden die Ausgangskomponenten im Einstufenverfahren mittels Blockverschäumung verarbeitet.

Das Raumgewicht wurde bestimmt gemäß DIN EN ISO 845:2009-10.
Die Stauchhärte (CLD 40 %) wurde bestimmt gemäß DIN EN ISO 3386-1:2015-10 bei einer Verformung von 40 %, 1. bzw. 4. Zyklus.
Die Zugfestigkeit und die Bruchdehnung wurden bestimmt gemäß DIN EN ISO 1798:2008-04.
Der Druckverformungsrest (DVR 90 %) wurde bestimmt gemäß DIN EN ISO 1856:2008-01 bei 90 % Verformung.
Der Druckverformungsrest (DVR 50 %) wurde bestimmt gemäß DIN EN ISO 1856:2008-01 (22 h, 70 °C) bei 50% Verformung.

In der folgenden Tabelle sind Vergleichsbeispiele als VBsp. und erfindungsgemäße Beispiele als Bsp. angegeben.

Tabelle 1: VBsp. 1 bis 7 und Bsp. 1 bis 4, Fortführung der Tabelle auf der nächsten Seite; pphp = parts per 100 parts polyol

| | Einheit | **VBsp1** | **Bsp1** | **Bsp2** | **Bsp3** | **Bsp4** | **Bsp5** |
|---|---|---|---|---|---|---|---|
| DESMOPHEN 24WB03 | [pphp] | 100 | 100 | 100 | 100 | 100 | 100 |
| Wasser (zugesetzt) | [pphp] | 1,75 | 1,75 | 1,75 | 1,75 | 1,75 | 1,75 |
| Tegostab BF 2370 | [pphp] | 0,60 | 0,60 | 0,60 | 0,60 | 0,60 | 0 |
| Tegostab BF 2470 | [pphp] | 0 | 0 | 0 | 0 | 0 | 0 |
| Ortegol VCO | [pphp] | 0 | 0 | 0 | 0 | 0 | 0 |
| NIAX Silicone L-620 | [pphp] | 0 | 0 | 0 | 0 | 0 | 0 |
| NIAX Silicone L-626 | [pphp] | 0 | 0 | 0 | 0 | 0 | 1,00 |
| Oxsoft DOA | [pphp] | 0 | 10,00 | 8,00 | 0 | 0 | 8,00 |
| Hexylhexanoat | [pphp] | 0 | 0 | 0 | 8,00 | 10,00 | 0 |
| Harnstoff (pur) | [pphp] | 0,39 | 0,39 | 0,39 | 0,39 | 0,39 | 0,39 |
| Dabco 33 LV | [pphp] | 0,45 | 0,45 | 0,45 | 0,45 | 0,45 | 0,45 |
| NIAX Catalyst A-1 | [pphp] | 0,16 | 0,16 | 0,16 | 0,16 | 0,16 | 0,16 |
| | | | | | | | |
| DESMODUR T 80 | [pphp] | 0 | 21,57 | 21,57 | 21,57 | 21,57 | 43,13 |
| DESMODUR T 65 | [pphp] | 43,13 | 21,57 | 21,57 | 21,57 | 21,57 | 0,0 |
| | | | | | | | |
| Wasser gesamt | [pphp] | 1,75 | 1,75 | 1,75 | 1,75 | 1,75 | 1,75 |
| INDEX | [-] | 100,5 | 100,5 | 100,5 | 100,5 | 100,5 | 100,5 |
| | | | | | | | |
| **Mechanische Eigenschaften** | | | | | | | |
| Raumgewicht | [kg/m$^3$] | 52,0 | 56,9 | 55,9 | 61,4 | 59,9 | 49,8 |

(fortgesetzt)

| **Mechanische Eigenschaften** | | | | | | | |
|---|---|---|---|---|---|---|---|
| Stauchhärte 40%; 1. Stauchung | [kPa] | 3,62 | 3,09 | 3,01 | 3,44 | 3,21 | 6,1 |
| Stauchhärte 40 %; 4. Stauchung | [kPa] | 2,63 | 2,42 | 2,36 | 2,79 | 2,6 | 2,64 |
| Druckverformungsrest 50 % | [%] | 2,1 | 1,5 | 1,6 | 2,9 | 3,1 | 7,4 |
| Druckverformungsrest 90 % | [%] | 2,3 | 1,9 | 2,0 | 2,1 | 2,1 | 11,6 |
| Zugfestigkeit | [kPa] | 98 | 58 | 64 | 77 | 69 | 57 |
| Bruchdehnung | [%] | 157 | 143 | 147 | 138 | 124 | 142 |
| | Einheit | **VBsp2** | **VBsp3** | **VBsp4** | **VBsp5** | **VBsp6** | **VBsp7** |
| DESMOPHEN 24WB03 | [pphp] | 100 | 100 | 100 | 100 | 100 | 100 |
| Wasser (zugesetzt) | [pphp] | 1,75 | 1,75 | 1,75 | 1,75 | 1,75 | 1,75 |
| Tegostab BF 2370 | [pphp] | 0 | 0 | 0 | 0 | 0 | 0 |
| Tegostab BF 2470 | [pphp] | 1,00 | 1,00 | 0 | 0 | 0 | 0 |
| Ortegol VCO | [pphp] | 1,00 | 1,00 | 0 | 0 | 0 | 0 |
| NIAX Silicone L-620 | [pphp] | 0 | 0 | 0,50 | 0,50 | 0 | 0 |
| NIAX Silicone L-626 | [pphp] | 0 | 0 | 0,50 | 0,50 | 1,00 | 1,00 |
| Oxsoft DOA | [pphp] | 0 | 0 | 0 | 0 | 0 | 0 |
| Hexylhexanoat | [pphp] | 0 | 0 | 0 | 0 | 0 | 0 |
| Harnstoff (pur) | [pphp] | 0,39 | 0,39 | 0,39 | 0,39 | 0,39 | 0,39 |
| Dabco 33 LV | [pphp] | 0,45 | 0,45 | 0,45 | 0,45 | 0,45 | 0,45 |
| NIAX Catalyst A-1 | [pphp] | 0,16 | 0,16 | 0,16 | 0,16 | 0,16 | 0,16 |
| DESMODUR T 80 | [pphp] | 43,15 | 21,57 | 43,13 | 21,57 | 43,13 | 21,57 |
| DESMODUR T 65 | [pphp] | 0 | 21,57 | 0 | 21,57 | 0 | 21,57 |
| | | | | | | | |
| Wasser gesamt | [pphp] | 1,75 | 1,75 | 1,75 | 1,75 | 1,75 | 1,75 |
| INDEX | [-] | 100,5 | 100,5 | 100,5 | 100,5 | 100,5 | 100,5 |
| | | | | | | | |
| **Mechanische Eigenschaften** | | | | | | | |
| Raumgewicht | [kg/m$^3$] | k.A. | k.A. | k.A. | k.A. | k.A. | - |
| Stauchhärte 40 %; 1. Stauchung | [kPa] | k.A. | k.A. | k.A. | k.A. | k.A. | - |
| Stauchhärte 40 %; 4. Stauchung | [kPa] | k.A. | k.A. | k.A. | k.A. | k.A. | - |
| Druckverformungsrest 50 % | [%] | k.A. | k.A. | k.A. | k.A. | k.A. | - |
| Druckverformungsrest 90 % | [%] | k.A. | k.A. | k.A. | k.A. | k.A. | - |
| Zugfestigkeit | [kPa] | k.A. | k.A. | k.A. | k.A. | k.A. | - |
| Bruchdehnung | [%] | k.A. | k.A. | k.A. | k.A. | k.A. | - |

Mit den kommerziell erhältlichen Komponenten Ortegol VCO, NIAX Silicone L-620 und L-626 konnten in den von den Herstellern empfohlenen Mengen keine stabilen Schäume mit den Systemen der vorliegenden Erfindung erhalten

werden, folglich konnten keine mechanischen Eigenschaften ermittelt werden (k.A. = keine Angabe möglich). Lediglich VBsp 7 zeigte keinen Schrumpf, wies jedoch eine inhomogene Porenstruktur auf, deshalb wurden die mechanischen Eigenschaften ebenfalls nicht ermittelt.

Es konnte gezeigt werden, dass mit den spezifischen Systemen der vorliegenden Erfindung trotz Reduktion oder sogar nicht Verwenden des Desmodur T 65 Anteils stabile Schäume mit äquivalenten Eigenschaften erhalten werden konnten. Enthält die Zusammensetzung einen geringen, erfindungsgemäßen Anteil an Desmodur T 65 so ist die Stabilität des Schaumes verbesserte gegenüber einem Schaum bei dem gar kein Desmodur T 65 verwendet wurde.

## Patentansprüche

**1.** Verfahren zur Herstellung von Polyurethanschaumstoffen durch Umsetzung von Komponente

A) enthaltend eines oder mehrere Polyetherpolyole A1, mit einer Hydroxylzahl gemäß DIN 53240-1:2013-06 von mehr als 120 mg KOH/g,
B) gegebenenfalls

B1) Katalysatoren, und/oder
B2) Hilfs- und Zusatzstoffen

C) Wasser und/oder physikalischen Treibmitteln,
mit
D) Di- und/oder Polyisocyanaten, welche im Wesentlichen aus 2,4-Toluylendiisocyanat und 2,6-Toluylendiisocyanat bestehen;

wobei die Herstellung bei einer Kennzahl von 70 bis 120 erfolgt,
**dadurch gekennzeichnet, dass** die Herstellung in Gegenwart mindestens einer Verbindung E erfolgt, die folgende Formel (I) aufweist:

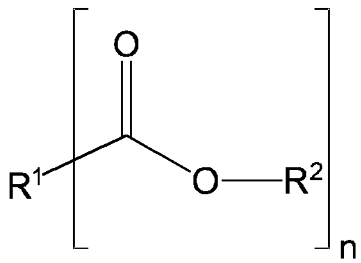

(I)

wobei

$R^1$ ein aromatischer Kohlenwasserstoffrest mit mindestens 5 Kohlenstoffatomen ist oder ein linearer, verzweigter, substituierter oder unsubstituierter aliphatischer Kohlenwasserstoffrest mit mindestens 2, im Falle von verzweigt mindestens 3, Kohlenstoffatomen ist;
$R^2$ ein linearer, verzweigter, substituierter oder unsubstituierter aliphatischer Kohlenwasserstoffrest ist; und
n gleich 1 bis 3 ist.

**2.** Verfahren gemäß Anspruch 1, **dadurch gekennzeichnet, dass** in Formel (I)
$R^1$ ein aromatischer Kohlenwasserstoffrest mit mindestens 6 Kohlenstoffatomen ist oder ein linearer, verzweigter, substituierter oder unsubstituierter aliphatischer Kohlenwasserstoffrest mit mindestens 3 Kohlenstoffatomen ist;
$R^2$ ein linearer, verzweigter, substituierter oder unsubstituierter aliphatischer Kohlenwasserstoffrest mit mindestens 3 Kohlenstoffatomen ist; und
n gleich 1 bis 3 ist.

**3.** Verfahren gemäß Anspruch 1 oder 2, **dadurch gekennzeichnet, dass** die Komponente A die folgende Zusammensetzung aufweist:

A1 80 bis 100 Gew.-Teile eines oder mehrerer Polyetherpolyole mit einer Hydroxylzahl gemäß DIN

53240-1:2013-06 von mehr als 120 mg KOH/g,

A2 0 bis 20 Gew.-Teile eines oder mehrerer Polyetherpolyole mit einer Hydroxylzahl gemäß DIN 53240-1:2013-06 von 20 mg KOH/g bis 120 mg KOH/g, bezogen auf die Summe der Gew.-Teile der Komponenten A1 und A2, wobei die Summe der Gewichtsteile A1 + A2 in der Zusammensetzung 100 ergibt.

**4.** Verfahren gemäß einem der vorstehenden Ansprüche, **dadurch gekennzeichnet, dass** die mindestens eine Verbindung E in einer Menge von 1,0 bis 15,0 Gew.-Teile eingesetzt wird, wobei sich alle Gewichtsteilangaben der Verbindung E auf 100 Gewichtsteile der Komponenten A1 beziehen.

**5.** Verfahren gemäß einem der vorstehenden Ansprüche, **dadurch gekennzeichnet, dass** als Komponente B

B1 Katalysatoren wie

a) aliphatische tertiäre Amine, cycloaliphatische tertiäre Amine, aliphatische Aminoether, cycloaliphatische Aminoether, aliphatische Amidine, cycloaliphatische Amidine, Harnstoff und Derivate des Harnstoffs und/oder

b) Zinn(II)-Salze von Carbonsäuren, und

B2 gegebenenfalls Hilfs- und Zusatzstoffe eingesetzt werden.

**6.** Verfahren gemäß einem der vorstehenden Ansprüche, **dadurch gekennzeichnet, dass** Komponente D mindestens 95 Gew.-% 2,4-Toluylendiisocyanat und 2,6-Toluylendiisocyanat umfasst.

**7.** Verfahren gemäß einem der vorstehenden Ansprüche, **dadurch gekennzeichnet, dass** in der Komponente D höchstens 26,5 Gew.-% an 2,6-Toluylendiisocyanat enthalten sind, basierend auf dem Gesamtgewicht der Komponente D.

**8.** Verfahren gemäß Anspruch 7, **dadurch gekennzeichnet, dass** 2,4-Toluylendiisocyanat und 2,6-Toluylendiisocyanat als eine Mischung mindestens zweier Chargen eingesetzt werden wobei die erste Charge 2,4-Toluylendiisocyanat zu 2,6-Toluylendiisocyanat im Verhältnis von 80 Gew.-% zu 20 Gew.-% enthält und die zweite Charge 2,4-Toluylendiisocyanat zu 2,6-Toluylendiisocyanat im Verhältnis von 67 Gew.-% zu 33 Gew.-% enthält, wobei der Anteil an der zweiten Charge höchstens 50 Gew.-% bezogen auf das Gesamtgewicht der ersten und der zweiten Charge beträgt.

**9.** Polyurethanschaumstoffe, erhältlich durch ein Verfahren gemäß einem der Ansprüche 1 bis 8.

**10.** Polyurethanschaumstoffe gemäß Anspruch 9, **dadurch gekennzeichnet, dass** es sich um viskoelastische Polyurethanschaumstoffe handelt.

**11.** Polyurethanschaumstoffe gemäß Anspruch 9 oder 10, **dadurch gekennzeichnet, dass** die Polyurethanschaumstoffe ein Raumgewicht gemäß DIN EN ISO 845:2009-10 von 40,0 bis 70,0 kg/$m^3$ aufweisen.

**12.** Verwendung der Polyurethanschaumstoffe gemäß einem der Ansprüche 9 bis 11 zur Herstellung von Matratzen, Kissen, Sitzbezügen, Schuheinlagen, Ohrenstöpsel, Schutzkleidung, Schutzausrüstung oder Schallisolierungen.

**13.** Zweikomponentensystem zur Herstellung von Polyurethanschaumstoffen enthaltend eine erste Komponente K1 umfassend oder bestehend aus:

Komponente A) enthaltend eines oder mehrere Polyetherpolyole A1, mit einer Hydroxylzahl gemäß DIN 53240-1:2013-06 von mehr als 120 mg KOH/g,

B) gegebenenfalls

B1) Katalysatoren, und/oder

B2) Hilfs- und Zusatzstoffen

C) Wasser und/oder physikalischen Treibmitteln, und

E) eine Verbindung, die folgende Formel (I) aufweist:

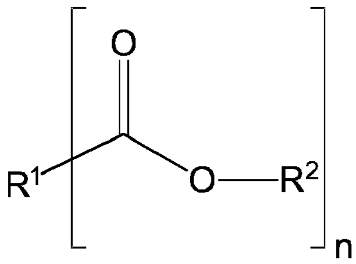

(I)

wobei

$R^1$ ein aromatischer Kohlenwasserstoffrest mit mindestens 5 Kohlenstoffatomen ist oder ein linearer, verzweigter, substituierter oder unsubstituierter aliphatischer Kohlenwasserstoffrest mit mindestens 2 Kohlenstoffatomen ist;
$R^2$ ein linearer, verzweigter, substituierter oder unsubstituierter aliphatischer Kohlenwasserstoffrest ist; und
n gleich 1 bis 3 ist
und eine zweite Komponente K2 umfassend oder bestehend aus:

D) Di- und/oder Polyisocyanaten, welche im Wesentlichen aus 2,4-Toluylendiisocyanat und 2,6-Toluylendiisocyanat bestehen, wobei die Komponente K1 und die Komponente K2 in einem Verhältnis einer Isocyanat-Kennzahl von 70 bis 120 zueinander vorliegen.

Europäisches Patentamt
European Patent Office
Office européen des brevets

# EUROPÄISCHER RECHERCHENBERICHT

Nummer der Anmeldung
EP 18 18 2378

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2015/045466 A1 (SOFUKU HIROSHI [JP] ET AL) 12. Februar 2015 (2015-02-12)<br>* Beispiele 13-15 *<br>* Absatz [0025] - Absatz [0026] *<br>* Absatz [0038] *<br>----- | 1-13 | INV.<br>C08G18/48<br>C08G18/76<br>C08G18/18<br>C08G18/20<br>C08G18/22<br>C08G18/30<br>C08G101/00 |
| A | JP 5 542324 B2 (INOUE MTP KK)<br>9. Juli 2014 (2014-07-09)<br>* Beispiele 11, 12 *<br>* Tabelle 1 *<br>* Absatz [0031] *<br>* Absatz [0036] *<br>----- | 1-13 | |

RECHERCHIERTE SACHGEBIETE (IPC)

C08G

Der vorliegende Recherchenbericht wurde für alle Patentansprüche erstellt

1

| Recherchenort | Abschlußdatum der Recherche | Prüfer |
|---|---|---|
| München | 8. Januar 2019 | Sütterlin, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 18 18 2378

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-01-2019

| Im Recherchenbericht angeführtes Patentdokument | Datum der Veröffentlichung | Mitglied(er) der Patentfamilie | Datum der Veröffentlichung |
|---|---|---|---|
| US 2015045466 A1 | 12-02-2015 | CN 104245768 A | 24-12-2014 |
| | | EP 2842977 A1 | 04-03-2015 |
| | | JP 5679385 B2 | 04-03-2015 |
| | | JP 2014114459 A | 26-06-2014 |
| | | JP WO2013161931 A1 | 24-12-2015 |
| | | KR 20150003762 A | 09-01-2015 |
| | | US 2015045466 A1 | 12-02-2015 |
| | | WO 2013161931 A1 | 31-10-2013 |
| JP 5542324 B2 | 09-07-2014 | JP 5542324 B2 | 09-07-2014 |
| | | JP 2010122561 A | 03-06-2010 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0176013 A
- EP 0000389 A
- EP 0007502 A
- EP 355000 A


### In der Beschreibung aufgeführte Nicht-Patentliteratur


- Kunststoff-Handbuch. Carl-Hanser-Verlag, 1993, vol. VII